# EUROPÄISCHE PATENTSCHRIFT

(11) **EP 0 687 649 B1**
(45) Veröffentlichungstag und Bekanntmachung des Hinweises auf die Patenterteilung: **14.01.1998**
(21) Anmeldenummer: 95107071.3
(22) Anmeldetag: 10.05.1995
(51) Int. Cl.: C01B 15/023

(54) **Verfahren zur Abtrennung katalysatorfreier Arbeitslösung aus dem Hydrierkreislauf des Anthrachinonverfahrens zur Herstellung von Wasserstoffperoxid**
Process for the separation of a catalyst-free work solution from the hydrogenation cycle of the anthrachinone process for the preparation of hydrogen peroxide
Procédé de séparation d'une solution de travail exempte de catalyseur du cycle d'hydrogénation du procédé antrachinone pour la préparation d'eau oxygénée

(30) Priorität: 31.05.1994 DE 4418931
(43) Veröffentlichungstag der Anmeldung: 20.12.1995
(73) Patentinhaber: Degussa Aktiengesellschaft, 60311 Frankfurt (DE)
(72) Erfinder: Birkenbeil, Hans, D-65835 Liederbach am Taunus (DE); Brand, Ulrich, Dr., D-63505 Langenselbold (DE); Goor, Gustaaf, Dr., D-63457 Hanau (DE); Kunkel, Wolfgang, Dr., D-60528 Frankfurt (DE)

(56) Entgegenhaltungen:
- DE-B- 1 272 292

## Beschreibung

Die Erfindung richtet sich auf ein Verfahren zur Abtrennung katalysatorfreier Arbeitslösung aus Edelmetall-Mohr, insbesondere Palladium-Mohr, als Katalysator enthaltender Arbeitlösung des Hydrierkreislaufs des sogenannten Anthrachinonverfahrens zur Herstellung von Wasserstoffperoxid durch Filtration der katalysatorhaltigen Arbeitslösung unter Verwendung von Filterkerzen.

Bekanntlich wird beim sogenannten Anthrachinonprozeß zur Herstellung von Wasserstoffperoxid, auch AO-Prozeß genannt, ein Reaktionsträger auf der Basis von einem oder mehreren 2-Alkylanthrachinonen und Tetrahydro-2-alkylanthrachinonen in einem organischen Lösungsmittelsystem in Gegenwart eines Katalysators mit Wasserstoff in die ensprechende Hydrochinonform überführt. Nach der Hydrierstufe wird die vom Katalysator befreite Arbeitlösung in der Oxidationsstufe mit einem sauerstoffhaltigen Gas behandelt, wobei sich unter Bildung von Wasserstoffperoxid die Chinonform des Reaktionsträgers zurückbildet. Schließlich wird Wasserstoffperoxid mit Wasser aus der oxidierten Arbeitslösung extrahiert und die Arbeitslosung, also das Gemisch aus dem Reaktionsträger und Lösungsmittel bzw. Lösungsmittelgemisch, in die Hydrierstufe zurückgeführt. Wesentliche Details zum AO-Prozeß sind Ullmann's Encyclopedia of Industrial Chemistry 5th ed. (1989) Vol. A 13, Seiten 447-456 zu entnehmen.

Als Hydrierkatalysatoren kommen vielfach solche auf der Basis von Edelmetallen zur Anwendung, wobei es sich um trägergebundene oder trägerfreie Suspensionskatalysatoren oder um Festbettkatalysatoren handelt. Der Kreislauf der Hydrierstufe umfaßt im Falle der Verwendung von Suspensionskatalysatoren im wesentlichen den eigentlichen Reaktor, eine Kreislaufleitung mit Kreislaufpumpe, eine Vorrichtung zur Zufuhr und Verteilung des Wasserstoffs, eine Vorrichtung zur Zufuhr von Arbeitslösung aus der der Extraktionsstufe nachgeschalteten Arbeitslösungstrocknung und eine Vorrichtung zur Entnahme katalysatorfreier hydrierter Arbeitslösung, wobei die letztgenannte Vorrichtung eine Fest-Flüssig-Trennvorrichtung einschließt.

Die quantitative und im Dauerbetreib störungsfreie Zurückhaltung des Suspensionskatalysators im Hydrierkreislauf und Abtrennung katalysatorfreier Arbeitslösung aus diesem sind Grundvoraussetzungen für einen sicheren und wirtschaftlichen Prozeß. Die erforderliche Fest-Flüssig-Trennung beruht auf einer Filtration unter Verwendung feinporiger Filter, welche periodisch rückgespült werden.

Gemäß dem Verfahren der CA-PS 1 208 619 lassen sich im Anthrachinonverfahren zur Herstellung von Wasserstoffperoxid Suspensionskatalysatoren mit einem Teilchenspektrum von 75 % größer 1 µm, wie etwa Raney-Nickel, unter Verwendung von Filterelementen aus gesinterten Metallpartikeln mit einer maximalen Porenweite von 8 µm zurückhalten. Zur Abtrennung einer katalysatorfreien hydrierten Arbeitslösung aus einer Palladium-Mohr enthaltenden Arbeitslösung ist dieses Verfahren ungeeignet, weil Pd-Mohr üblicherweise ein Primärteilchenspektrum zwischen 5 und 50 nm aufweist und ein derartiges Sintermetallfilter einerseits nicht mohrdicht ist und andererseits rasch verblockt - siehe Vergleichsbeispiel 3 in der DE-OS 42 17 245.

Zur Abtrennung einer katalysatorfreien hydrierten Arbeitslösung aus Pd-Mohr enthaltender Arbeitslösung eignen sich gemäß US 3,433,358 Filterkerzen aus Kohlenstoffmaterial, sogenannte Carbokerzen, deren Porenweite größer sein kann als der Durchmesser der abzutrennenden Pd-Teilchen. Die Wandstärke derartiger auf dem Prinzip der Tiefenfiltration wirksamer Filterkerzen wird mit mindestens 10 mm angegeben. In der US 3,433,358 ist zwar auch die Rede von einer Oberflächenfiltration; Untersuchungen der Anmelderin der vorliegenden Erfindung zeigten aber, daß eine Filterdicke, wie sie bei üblichen Membranfiltern vorliegt, bei Carbokerzen völlig unzureichend wäre. Wegen der begrenzten mechanischen Stabilität solcher Carbokerzen sind der Bauart enge Grenzen gesetzt; bei der geforderten Filtrationsleistung resultieren recht große Filtergehäuse und damit eine hohe Kapitalbindung. Es besteht Interesse an wirksameren und stabileren Filterelementen, insbesondere solchen mit verbesserter mechanischer Stabilität und erhöhter Filtrationsleistung zwecks Erhöhung der Wirtschaftlichkeit des AO-Verfahrens.

In der zuvor gewürdigten US 3,433,358 wird auch gelehrt, daß Carbokerzen gegenüber metallischen und keramischen Filtermaterialien weit überlegen sind. Gestützt wird diese Aussage auch durch die etwa 25 Jahre jüngere DE-OS 41 29 865: Hiernach ist bei der Verwendung von Filterelementen auf der Basis eines Metall- oder Keramiksinters in gattungsgemäßen Verfahren unter Verwendung von Palladiumschwarz (= Pd-Mohr) ein spezielles, sehr aufwendiges Reinigungsverfahren erforderlich, um das Filterelement wiederverwendbar zu machen und eine technisch akzeptable Filtrationsleistung zu erhalten. Das Reinigungsverfahren mindert die Wirtschaftlichkeit des AO-Verfahrens.

Wie aus der DE-OS 42 17 245 bekannt ist, läßt sich Pd-Mohr im AO-Verfahren auch unter Verwendung eines nach dem Querstromprinzip betriebenen Mikrofilters mit einer Filtermembran aus keramischem Material mit einer Porenweite von zweckmäßigerweise 0,1 bis 1,0 µm zurückhalten und katalysatorfreie hydrierte Arbeitslösung aus dem Hydrierkreislauf abtrennen.

Nachteilig an dem vorerwähnten Verfahren mit der Querstromfiltrationstechnik ist, daß in der Praxis die mittlere Porenweite der Membran recht niedrig, vorzugsweise zwischen 0,1 und 0,5 µm, ist, woraus eine begrenzte Filtrationsleistung resultiert. Zusätzlich zeigte sich im Dauerbetrieb derartiger Filterelemente, daß die Filtrationsleistung zwar langsam aber kontinuierlich abfällt, was durch vermehrtes Rückspülen nicht zu vermeiden ist.

Unter Kennziffer 314 in Verfahrenstechnik 26 (1992) Nr. 6, 30 werden Keramik-Filterelemente vorgestellt, welche eine asymmetrische Kornkeramik aufweisen. Als Einsatzgebiet wird die Katalysatorabscheidung und Rückgewinnung, unter anderem bei der Wasserstoffperoxidherstellung, angegeben. Weder aus diesem Dokument noch aus dem auf die Kennzifferanfrage erhältlichen Firmenprospekt ergeben sich Hinweise, ob es sich bei den Katalysatoren um die im AO-Verfahren überwiegend eingesetzten trägergebundenen oder die seltener eingesetzten und wesentlich schwieriger filtrierbaren nicht-trägergebundenen Edelmetallkatalysatoren handelt. Die vorgestellten Filterelemente weisen einen Stützkörper mit einer mittleren Porenweite um 40 µm und eine Membran mit einer mittleren Porenweite von 3 oder 5 µm auf. In Anbetracht des zuvor aufgezeigten Stands der Technik zur Katalysatorabtrennung im AO-Verfahren wird ein Fachmann das Dokument "Verfahrenstechnik 26 (1992), Nr. 6" nur auf solche AO-Verfahren beziehen, in welchen die Porenweite des wirksamen Filterelements um oder kleiner als die Teilchengröße der abzutrennenden Katalysatorteilchen ist. Für AO-Verfahren unter Verwendung von Pd-Mohr als Katalysator wird ein Fachmann die genannten Filterkerzen kaum in Betracht ziehen, weil die Porenweite der Membran (3 oder 5 µm) um ein Vielfaches größer ist als der Durchmesser der Primärpartikel des Pd-Mohrs (5 bis 50 nm) und zudem mit ungenügender Mohrdichtigkeit, Verblockungsgefahr und Abfall der Filtrationsleistung gerechnet werden mußte.

Aufgabe der Erfindung ist demgemäß ein Verfahren zur Abtrennung von Edelmetall-Mohr, insbesondere Pd-Mohr, im AO-Verfahren aufzuzeigen, das die Nachteile der bekannten Verfahren unter Verwendung von Filterkerzen überwindet und zu einer höheren Wirtschaftlichkeit, darunter höheren Filtrationsleistung und geringeren Störanfälligkeit, des AO-Verfahrens führt.

Die Aufgabe läßt sich durch das anspruchsgemäße Verfahren lösen. Gefunden wurde demgemäß ein Verfahren zur Abtrennung katalysatorfreier Arbeitslösung aus Edelmetall-Mohr als Katalysator enthaltender Arbeitslösung des Hydrierkreislaufs des Anthrachinonverfahrens zur Herstellung von Wasserstoffperoxid durch Filtration der katalysatorhaltigen Arbeitslösung unter Verwendung von Filterkerzen, welche periodisch mit katalysatorfreier Arbeitslösung oder sie enthaltender Lösungsmittel rückgespült werden, das dadurch gekennzeichnet ist, daß man Filterkerzen aus einem offenporigen Stützkörper auf der Basis eines Kohlenstoff-, metallischen oder keramischen Materials mit einer mittleren Porenweite im Bereich von 5 bis 100 µm und einer auf einer Seite des Stützkörpers angeordneten ein- oder mehrschichtigen Membran aus keramischem Material mit einer mittleren Porenweite im Bereich von größer 1 bis 10 µm verwendet. Die Unteransprüche richten sich auf bevorzugte Ausführungsformen.

Überraschenderweise sind die erfindungsgemäß zu verwendenden Filterkerzen aus einem Stützkörper, wobei ein Stützkörper aus keramischem Material bevorzugt wird, und einer keramischen Membran, welche für die eigentliche Filtration verantwortlich ist, quantitativ zur Zurückhaltung von Edelmetall-Mohr-Hydrierkatalysatoren, wie insbesondere des besonders wirksamen, äußerst feinteiligen Palladium-Mohrs geeignet. Überraschenderweise läßt sich mit den erfindungsgemäß zu verwendenden Filterkerzen die Filtration unter Aufrechterhaltung der Mohrdichtigkeit des Filters mit einem wesentlich höheren spezifischen Filtratfluß (m³ Arbeitslösung pro m² Filterfläche · Stunde) betreiben als dies unter Verwendung der vorbekannten Carbokerzen möglich war. Bei Normierung des spezifischen Filtratflusses auf den Elementedruckverlust ist die spezifische Filtrationsleistung bei den bevorzugten erfindungsgemäß zu verwendenden Filterkerzen mehr als viermal so hoch wie diejenige unter Verwendung von Carbokerzen. Damit wird die Wirtschaftlichkeit des AO-Verfahrens erhöht, weil bei gegebener installierter Filterfläche die Leistung erhöht oder bei vorgegebener Filtrationsleistung die hierfür erforderliche Filterfläche und Apparatedimensionierung gegenüber dem Stand der Technik reduziert und damit das Investitionsvolumen einer Anlage und Kosten für die in der Filtereinheit befindliche Menge Arbeitslösung und Edelmetall-Mohr gesenkt werden können.

Ein weiterer Vorteil des erfindungsgemäßen Verfahrens besteht in der größeren Betriebssicherheit, indem die erfindungsgemäß zu verwendenden Filterkerzen mechanisch stabiler sind und Kerzenbruch bei der Montage und durch betriebliche Druckstöße in einem größeren Umfang vermeidbar ist als bei den Carbo-Filterkerzen. Schließlich lassen sich die erfindungsgemäßen Filterkerzen in größerer Abmessung fertigen als die vorbekannten Carbo-Filterkerzen, woraus ein geringerer Montageaufwand zur Installation einer bestimmten Filterfläche resultiert.

Es war ferner nicht vorhersehbar, daß im erfindungsgemäßen Verfahren unter Verwendung von Filterkerzen mit einem Stützkörper und einer Membran aus keramischem Material bei quantitativer Rückhaltung des Katalysators eine wesentlich höhere Filtrationsleistung bei gleichzeitiger Aufrechterhaltung derselben im Dauerbetrieb über mehrere Monate erzielt wird als im vorbekannten Verfahren unter Verwendung eines nach dem Querstromprinzip betriebenen Mikrofilters mit einer Filtermembran aus keramischem Material (DE-OS 42 17 245). Während im vorbekannten Querstrom-Filtrationsverfahren im Produktionsmaßstab die mittlere Porenweite der keramischen Membran des Mikrofilters vorzugsweise zwischen 0,1 und 0,5 µm liegen mußte, erwiesen sich die im erfindungsgemäßen Verfahren eingesetzten Filter mit einer Membran mit zehnfach größerer Porenweite überraschenderweise als vollständig mohrdicht.

Die erfindungsgemäß zu verwendenden Filterkerzen weisen eine für Filterkerzen übliche Bauart auf. Im allgemeinen befindet sich die Membran der Filterkerze auf derjenigen Seite derselben, welche mit der katalysatorhaltigen Arbeitslösung in Kontakt steht. Die Wandstärke des Stützkörpers der für den technischen Einsatz im AO-Verfahren geeigneten Filterkerzen liegt üblicherweise im Bereich zwischen 5 und 15 mm, insbesondere etwa 10 mm. Die Länge der Filterkerzen ist in weiten Bereichen wählbar; besonders zweckmäßig sind Filterkerzen mit einer Länge zwischen 50 und 150 cm. Die Filterkerzen sind in bekannter Weise in einem Filtergehäuse angeordnet, wobei Filterkerze und Gehäuse die erforderlichen Zu- und Ableitungen für die katalysatorhaltige und die katalysatorfreie Arbeitslösung aufweisen.

Bei dem Material für den Stützkörper der Filterkerze kann es sich sowohl um ein Material auf der Basis von im wesentlichen Kohlenstoff als auch um ein keramisches oder metallisches Material handeln. Bevorzugt werden oxidische, silikatische und carbidische keramische Materialien; beispielhaft werden SiO₂, Sinterglas, Aluminiumxoid, Zirkondioxidkeramik, Cordierit (Al₂O₃ · SiO₂ · MgO) und Silicumcarbid genannt. Siliciumcarbid wird als Material für den Stützkörper besonders bevorzugt. Die mittlere Porenweite des Stützkörpers, bestimmt unter Verwendung eines Kapillarflußporometers, liegt im allgemeinen im Bereich zwischen 10 und 100 µm, vorzugsweise zwischen 20 und 50 µm. Die Porosität bevorzugter Filterkerzen, welche übwerwiegend durch den Stützkörper beeinflußt wird, liegt im allgemeinen zwischen 30 und 40 %.

Die Membran der Filterkerze besteht aus einem keramischen Material, vorzugsweise aus im wesentlichen α-Aluminiumoxid, einem Mischoxid, vorzugsweise einem solchen auf der Basis von SiO₂ und Al₂O₃ oder Zirkonoxid. Die mittlere Porenweite der Membran, bestimmt unter Verwendung eines Kapillarflußporometers, liegt im Bereich von größer 1 bis 10 µm; bevorzugt werden Membranen mit einer mittleren Porenweite im Bereich von größer 1 bis 5 µm und insbesondere von 3 bis 5 µm. Die mittlere Porenweite der Membran ist kleiner als die mittlere Porenweite des Stützkörpers. Die Dicke der Membran kann in weiten Bereichen liegen, meist zwischen 10 und 1000 µm.

Im erfindungsgemäßen Verfahren werden die Filterkerzen periodisch rückgespült, um die an der Oberfläche der Membran abgeschiedene Menge Katalysator mit der Arbeitslösung dem Hydrierkreislauf wieder zuzuführen. Das Verfahren umfaßt somit Perioden für das eigentliche Filtrieren und Perioden für den Rückspülvorgang. Die Filtrations- und Rückspülzeiten werden durch orientierende Versuche ermittelt. Die Filterkerzen lassen sich in bekannter Weise gut rückspülen. Abgesehen von einer Schwärzung durch den Katalysator (Palladium-Mohr), erwiesen sich die untersuchten Elemente nach mehrmonatigem Betrieb völlig frei von Anhaftungen. Nach üblicher Anfahrphase der Filterkerzen ist bei weiterem Betrieb derselben - Filtration mit periodischen Rückspülen - kein Druckabfall festzustellen; die Filtrationsleistung zeichnet sich durch ein sehr stabiles hohes Niveau aus. Zum Zwecke der Rückspülung wird der Druck zwischen der Retentat- und Permeatseite der Filterkerze umgekehrt. Zum Rückspülen wird im allgemeinen die katalysatorfreie Arbeitslösung verwendet; bei Bedarf kann jedoch auch das in der Arbeitslösung enthaltene Lösungsmittel oder Lösungsmittelgemisch zum Rückspülen verwendet werden.

Die erfindungsgemäßen Maßnahmen zum Abtrennen einer katalysatorfreien Arbeitslösung aus einer Edelmetall-Mohr enthaltenden Arbeitslösung lassen sich in allen bekannten AO-Verfahren unter Verwendung von Edelmetall-Mohr, insbesondere Palladium-Mohr, gut realisieren. Beispielsweise können Arbeitslösungen verwendet werden, welche unterschiedliche Reaktionsträger oder Reaktionsträgergemische enthalten. Auch bezüglich der Auswahl der Lösungsmittel und Lösungsmittelgemische der Arbeitslösung ist das erfindungsgemäße Verfahren nicht limitiert. Zur Durchführung der Hydrierstufe wird beispielhaft auf die US 4,428,923 sowie die darin zitierte US 3,423,176 hingewiesen. Obgleich üblicherweise hydrierte Arbeitslösung aus dem katalysatorhaltigen Hydrierkreislauf über die Filterkerzen abgezogen wird, ist das erfindungsgemäße Verfahren auch auf Arbeitslösungen anwendbar, welche nicht oder nur teilweise hydriert sind. Die Erfindung wird anhand der nachstehenden Beispiele und Vergleichsbeispiele weiter verdeutlicht.

### Beispiele B1, B2 und B3 sowie Vergleichsbeispiel VB1

In einer Technikumsanlage zur Herstellung von Wasserstoffperoxid nach dem Anthrachinonverfahren wurde die Abtrennung katalysatorfreier Arbeitslösung aus katalysatorhaltiger Arbeitslösung des Hydrierkreislaufs unter Verwendung von Carbo-Filterkerzen (VB1) und erfindungsgemäß zu verwendenden Filterkerzen aus einem Keramik-Stützkörper mit einer Keramik-Membran (B1, B2 und B3) unter vergleichbaren Betriebsbedingungen untersucht.

Die Arbeitslösung (AL) enthielt als Reaktionsträger 2-Ethylanthrachinon und 2-Ethyltetrahydroanthrachinon und als Lösungsmittel ein Gemisch aus im wesentlichen aromatischen Kohlenwasserstoffen mit einem Siedebereich von 185 bis 205 °C und einem Tetraalkylharnstoff. Als Katalysator wurde der AL Palladium-Mohr in einer Konzentration von etwa 0,7 g/l und 1,4 g/l eingesetzt. Die Hydrierung wurde in einer Vorrichtung gemäß US 4,428,923 durchgeführt, so daß das H₂O₂-Äquivalent nach der Hydrierung etwa 10 g/l betrug.

Die in VB1 eingesetzten Carbo-Filterkerzen lagen in Form eines Hohlzylinders mit einer Länge von 100 mm vor. Die gleichfalls hohlzylinderförmigen erfindungsgemäßen Filterkerzen in B1, B2 und B3 hatten die gleiche Länge. Der Stützkörper in B1 und B2 bestand aus Siliciumcarbid mit einer mittleren Porenweite von etwa 40 µm; die Membran auf der Außenseite der Filterkerze basierte auf einem Mischoxid auf der Basis SiO₂ und Al₂O₃ mit einer Porenweite von 3 µm (B1) beziehungsweise 5 µm (B2). In B3 bestand der Stützkörper im wesentlichen aus α-Al₂O₃, und die Membran auf der Außenseite der Filterkerze basierte auf α-Al₂O₃ mit einer Porenweite von 3 µm. Die Filter wurden alle 15 Minuten 10 bis 20 Sekunden lang mit AL zurückgespült. Die verfahrenstechnischen Daten folgen aus der Tabelle 1:

**Tabelle 1**

| | B 1 | B 2 | B 3 | VB 1 |
|---|---|---|---|---|
| Filterfläche pro Hauptfilter (m²) (Außenfläche der Kerze) | 0,019 | 0,019 | 0,019 | 0,022 |
| Mittlere Filter-Druckdifferenz (kPa) (während der Filtrationsphase) | 40-80 | kleiner 40 | 30-70 | 150-230 |
| Mittlerer spez. Filtratfluß (m³/m²·h) | 1,1 | 1,1 | 1,1 | 1,0 |
| Dauer der Versuchsperiode (Tage) | 21 | 3 | 7 | 10 |

Die Leistungsdaten in Abhängigkeit von der Pd-Konzentration und dem Vorwärtsfluß der Arbeitslösung bei Verwendung der erfindungsgemäßen Filterkerzen aus B1 folgen aus der Tabelle 2:

**Tabelle 2**

| | 0,7 g Pd / l AL | | 1,4 g Pd / l AL | |
|---|---|---|---|---|
| Arbeitslösungsfluß (l/h) | spez. Filtratfluß (m³/m².h) | Filterdruckdifferenz (kPa) | spez. Filtratfluß (m³/m².h) | Filterdruckdifferenz (kPa) |
| 40 | 1,09 | 40 | 1,09 | 35 |
| 80 *) | 2,17 | 70 | 2,17 | 95 |

| | | | | |
|---|---|---|---|---|
| *) Rückspülfrequenz verdoppelt. | | | | |

Nach Versuchsende waren die Filterkerzen in B1, B2 und B3 völlig frei von Anhaftungen. Die Filterkerzen in B1, B2, B3 und VB1 erwiesen sich als vollständig mohrdicht, die Filtratseite war frei von Pd-Partikeln.

### Beispiele B4, B5 und B6 sowie Vergleichsbeispiel VB2

In eine Filtrationstestapparatur wurden folgende Filterkerzen eingebaut:
- B4:: Aufbau und mittlere Porenweite analog B1.
- B5:: Stützkörper aus Siliciumcarbid und Membran aus glasgebundenem Aluminiumoxid; mittlere Porenweite der Membran 1,5 µm.
- B6:: Stützkörper α-Al₂O₃, Membran α-Al₂O₃, Porenweite der Membran 3,0 µm.
- VB2:: Aufbau und Porenweite analog VB1.

Über den mit dem jeweiligen Element bestückten Testfilter wurden 6 l eines Aromatengemisches, das Hauptbestandteil einer typischen Arbeitslösung ist, im Kreislauf gepumpt. Der Anfangsflüssigkeitsstrom betrug ca. 10 m³ Lösung pro m² Filterfläche und Stunde. In die Kreislauflösung wurden Testpalladien mit einer BET-Oberfläche (gemessen mit N₂ nach DIN 61131 (Ausgabe 7/1993)) von:
a) 17 m²/g, b) 86 m²/g eingeschleust.
Die Mohr-Menge war jeweils so bemessen, daß eine Konzentration von 0,5 g/l resultierte.

1 und 2 Minuten nach Zugabe des Test-Mohres wurden je 100 ml des Filtrats auf Katalysator-Freiheit überprüft. Hierzu wird die Filtratprobe über ein Blauband-Papierfilter ein zweites Mal filtriert. Wenn auf dem Papier eine graue Färbung zu erkennen ist und auf das Filter gegossenes 30 gew.-%iges H₂O₂ sich sofort zersetzt, ist das Filtrat nicht katalysatorfrei.

Es zeigte sich, daß alle eingesetzten Pd-Mohre sowohl von den Carbo-Filterkerzen (VB2) als auch den erfindungsgemäßen Keramik-Filterkerzen quantitativ zurückgehalten werden.

### Beispiel B7 und Vergleichsbeispiel VB3

In einer Produktionsanlage zur Herstellung von Wasserstoffperoxid nach dem Anthrachinonverfahren wurde während einer sechsmonatigen Versuchsperiode parallel nebeneinander jeweils ein Teilstrom der katalysatorhaltigen hydrierten Arbeitslösung, enthaltend 2-Ethylanthrahydrochinon und 2-Ethyl-tetrahydroanthrachinon, aromatische Kohlenwasserstoffe und Trioctylphosphat sowie Palladium-Mohr, unter Verwendung eines mit Carbo-Filterkerzen bestückten Filters (VB3) und eines mit erfindungsgemäß zu verwendenden Keramik-Filterkerzen bestückten Filters (B7) filtriert. Der Aufbau der Filterkerzen in VB3 und B7 entsprach jenem, wie er in VB1 und B1 angegeben wurde, jedoch betrug die Länge der Carbo-Filterkerzen 500 mm und jene der Keramik- Filterkerzen 1000 mm. Die installierte Filterfläche war in VB3 doppelt so hoch wie in B7. Die Filterablaufsteuerung, welche die Perioden Filtrieren, Rückspülen und Pause umfaßte, wurde in B7 und VB3 derart betrieben, daß während der Filtrationsperiode die filtrierte Menge Pd-Mohr pro Filterfläche bei B7 und VB3 gleich groß war; bei den in B7 und VB3 gewählten Filtratflüssen wurde daher in B7 doppelt so häufig zurückgespült wie in VB3.

In B7 war der spezifische Filtratfluß im Mittel doppelt so hoch wie in VB3. Normiert auf den Druckverlust in den Filterkerzen war der spezifische Filtratfluß (m³/m².h.bar) in B7 im Mittel vier- bis fünfmal so hoch wie im VB3.

Die Filtrationsleistung der Filterkerzen in B7 zeigte innerhalb der Versuchsdauer keinerlei Abnahmetendenz; es war auch kein Verblocken festzustellen. Unter den in B7 und VB3 gewählten Versuchsbedingungen unter Verwendung von Pd-Mohr in einer Menge um 0,5 und 1,0 g/l wurde der Katalysator an der Außenseite der Filterkerzen zurückgehalten; die filtrierte Arbeitslösung war katalysatorfrei.

Der geringe Druckverlust in B7 erlaubt es, den Filtratfluß gegenüber demjenigen des Standes der Technik wesentlich zu erhöhen.

### Vergleichsbeispiele VB4 und VB5

In einer Produktionsanlage zur Herstellung von Wasserstoffperoxid nach dem Anthrachinonverfahren unter Prozeßbedingungen, die im wesentlichen denen entsprachen, die in B7 / VB3 angegeben sind, wurden Carbo-Filterkerzen und Querstrom (= Cross-Flow)-Filterelemente analog B4 der DE 42 17 245 A1 parallel nebeneinander getestet. Stützkörper der Querstrom-Filterelemente α-Al₂O₃ (Porenweite 7 bis 11 µm), Membran α-Al₂O₃ mit 1 µm (= VB4) beziehungsweise 4 µm (= VB5).

Zu Vergleichszwecken (Tabelle 3) wurde die spezifische Filtrationsleistung jeweils auf die Fläche und die transmembrane Druckdifferenz normiert (m³/m²·h·bar) und die Leistung der Querstrom-Filter und der erfindungsgemäßen Kerzen-Filter auf jene der Carbo-Kerzen-Filter bezogen (in analoger Weise, wie dies bei B7 und VB3 in der Anmeldung erfolgte).

**Tabelle 3**

| | Referenz-Filter Carbo-Kerzen | | Cross-Flow-Filter Keramik-Membran | | Vergleich |
|---|---|---|---|---|---|
| VB4 | | | Porenweite: **1 µm** | | |
| Betriebsstunden | Spezifische Filtrationsleistung (m³/m²·h·bar) | Restleistung (bez. auf die Anfangsleistung) (%) | Spezifische Filtrationsleistung (m³/m²·h·bar) | Restleistung (bez. auf die Anfangsleistung) (%) | Leistungsverlust Cross-Flow-Filter in Relation zum Referenzfilter |
| 0 | 1,2 | 100 | 2,1 | 100 | |
| 1500 | 0,86 | 78 | 1,4 | 66 | - 15 % |
| 3000 | 0,8 | 67 | 0,6 | 29 | - 57 % |

| VB5 | | | Porenweite: **4 µm** | | |
|---|---|---|---|---|---|
| 0 | 1,06 | 100 | 2,00 | 100 | |
| 1500 | 0,73 | 69 | 0,41 | 21 | - 69 % |
| 3000 | | | | | Versuch vorzeitig abgebrochen |

Der Leistungabfall bei der Querstrom-Filtration gemäß DE 42 17 245 A1 übersteigt jenen bei Verwendung von Carbo-Filterkerzen ganz erheblich. Zudem kam es während der Testphase bei Verwendung der Querstromfilter in nachgeschalteten Sicherheitsfiltern allmählich zur Verblockung durch nicht zurückgehaltenes Palladium-Mohr.

## Patentansprüche

1. Verfahren zur Abtrennung katalysatorfreier Arbeitslösung aus Edelmetall-Mohr als Katalysator enthaltender Arbeitslösung des Hydrierkreislaufs des Anthrachinonverfahrens zur Herstellung von Wasserstoffperoxid durch Filtration der katalysatorhaltigen Arbeitslösung unter Verwendung von Filterkerzen, welche periodisch mit katalysatorfreier Arbeitslösung oder sie enthaltender Lösungsmittel rückgespült werden,
dadurch gekennzeichnet,
daß man Filterkerzen aus einem offenporigen Stützkörper auf der Basis eines Kohlenstoff-, metallischen oder keramischen Materials mit einer mittleren Porenweite im Bereich von 5 bis 100 µm und einer auf einer Seite des Stützkörpers angeordneten ein- oder mehrschichtigen Membran aus keramischem Material mit einer mittleren Porenweite im Bereich von größer 1 bis 10 µm verwendet.

2. Verfahren nach Anspruch 1,
dadurch gekennzeichnet,
daß der Stützkörper der Filterkerze aus einem keramischen Material, vorzugsweise aus Aluminiumoxid oder Siliciumcarbid besteht und eine mittlere Porenweite im Bereich von 20 bis 50 µm aufweist.

3. Verfahren nach Anspruch 1 oder 2,
dadurch gekennzeichnet,
daß die Membran aus im wesentlichen α-Aluminiumoxid, SiO₂ und Al₂O₃ enthaltenden Mischoxiden oder Zirkonoxid besteht und eine mittlere Porenweite im Bereich von größer 1 bis 5 µm, vorzugsweise im Bereich von 3 bis 5 µm, aufweist.

4. Verfahren nach einem der Ansprüche 1 bis 3,
dadurch gekennzeichnet,
daß die Arbeitslösung Palladium-Mohr enthält.

## Claims

1. Process for the separation of catalyst-free working solution from working solution, containing noble-metal black as catalyst, of the hydrogenation circuit of the anthraquinone process for the production of hydrogen peroxide by filtration of the working solution containing catalyst using filter cartridges, which are periodically back-flushed with catalyst-free working solution or with solvent containing it,
characterized in that
filter cartridges are used that are made of an open-pore supporting body based on a carbon, metallic or ceramic material having a mean pore size in the range from 5 to 100 µm and, arranged on one side of the supporting body, a single- or multi-layer membrane of ceramic material having a mean pore size in the range from greater than 1 to 10 µm.

2. Process according to claim 1,
characterized in that
the supporting body of the filter cartridge consists of a ceramic material, preferably of aluminium oxide or silicon carbide, and has a mean pore size in the range from 20 to 50 µm.

3. Process according to claim 1 or 2,
characterized in that
the membrane consists either of mixed oxides substantially containing α-aluminium oxide, SiO₂ and Al₂O₃ or of zirconium oxide and has a mean pore size in the range from greater than 1 to 5 µm, preferably in the range from 3 to 5 µm.

4. Process according to one of claims 1 to 3,
characterised in that
the working solution contains palladium black.

## Revendications

1. Procédé de séparation de solution de travail débarrassée de catalyseur d'une solution de travail contenant du métal noble-Mohr ou noir de palladium en tant que catalyseur, du circuit d'hydrogénation du procédé à l'anthraquinone en vue de la fabrication de peroxyde d'hydrogène, par filtration de la solution de travail contenant le catalyseur en utilisant des bougies de filtration qui sont périodiquement rincées à contre-courant avec la solution de travail débarrassée de catalyseur ou avec le solvant qui en contient,
caractérisé en ce qu'
on utilise des bougies de filtration en corps d'appui à pores ouverts à base d'un matériau carboné, métallique ou céramique ayant une largeur moyenne de pores dans la plage de 5 à 100 µm et une membrane à une ou plusieurs couches disposées sur un côté du corps d'appui en matériau céramique ayant une largeur moyenne de pores dans la zone de plus grand que 1 à 10 µm.

2. Procédé selon la revendication 1,
caractérisé en ce que
le corps d'appui des bougies de filtration est formé d'un matériau céramique, de préférence en oxyde d'aluminium ou en carbure de silicium et possède une largeur moyenne de pores allant de 20 à 50 µm.

3. Procédé selon la revendication 1 ou la revendication 2,
caractérisé en ce que
la membrane consiste en des oxydes mixtes renfermant pour l'essentiel de l'oxyde d'aluminium-α, des oxydes mixtes contenant SiO₂ et Al₂O₃ ou de l'oxyde de zirconium et possède une largeur moyenne de pores dans la zone allant de plus grand que 1 à 5 µm de préférence dans la zone de 3 à 5 µm.

4. Procédé selon l'une des revendications 1 à 3,
caractérisé en ce que
la solution de travail renferme du noir de palladium.
